# EUROPEAN PATENT APPLICATION

(11) **EP 1 864 577 A1**
(43) Date of publication of application: **12.12.2007**
(21) Application number: 06725816.0
(22) Date of filing: 14.03.2006
(51) Int. Cl.: A22C 25/17, A22C 25/02, A22C 25/14, A23L 1/025, A23L 1/01, A47J 27/04

(54) **METHOD OF COOKING AND CLEANING FISH AND SHELLFISH AND INSTALLATION FOR IMPLEMENTING SAME**

(30) Priority: 17.03.2005 ES 200500625
(71) Applicant: Gonzales Alvarez, Julio César, E-36330 Vigo, Pontevedra (ES)
(72) Inventor: Gonzales Alvarez, Julio César, E-36330 Vigo, Pontevedra (ES)
(74) Representative: Temino Ceniceros, Ignacio
(86) International application number: PCT/ES2006/000122
(87) International publication number: WO 2006/097557

(57) **Abstract**

The invention relates to the cooking of fish using a microwave oven (8) which selectively heats the different parts of the fish or shellfish at a constant temperature using a series of magnetrons (12) that are guided by a control robot (7), such that the fish is released at the correct cooking temperature with the skin removed therefrom. Following cooking, the fish is introduced into a cleaning unit (21) which removes the skin using remote-controlled pressurised water injector nozzles, said skin being recovered by a filter, and which conveys the skinless fish to a quality control cabin (28), after which it is placed on a packing conveyor belt (30). All of the aforementioned operations are performed as part of a linear, continuous, automatic process.

## Description

### OBJECT OF THE INVENTION

This invention is a method for cooking and cleaning different types of fish and shellfish, as well as the facilities to be used for carrying out these processes.

The object of the invention is to provide a device that weighs, treats, cooks and cleans the skins of fish and shellfish in both an ongoing and fully automated way, thereby enabling the user to carry out a complete and thorough control of the quality of the products throughout the entire process.

Therefore the twofold object of the invention is to provide the fish in skinless form and at the optimum cooking point when it emerges from the installation, as well as to make the skin from the fish available so that it can subsequently be used.

### BACKGROUND TO THE INVENTION

Until the present time, the methods that have been used to cook and clean fish on an industrial scale, have been based either upon the use of boiling pans filled with water and salt or airtight pressure cooking devices, which use steam and cooling by water and vacuum to cook the fish, in such a way that the skin of the fish, or the shells, in the case of shellfish, can subsequently be cleaned; a large amount of manual labour is required to carry out these processes, all of which amounts to a considerable associated cost.

The aforementioned process does not guarantee that the fish is perfectly cooked, because in order to achieve this it is necessary for each one of the tissues to reach a specific and constant temperature during the cooking process, and up to the present time this has not been achieved.

### DESCRIPTION OF THE INVENTION

The method for cooking and cleaning different types of fish and shellfish and the installation used to carry this out that the invention proposes, manages to overcome the above-mentioned problem in a totally satisfactory way.

With a view to this, the method is based on an ongoing cooking and cleaning process that takes place automatically, which first of all involves weighing the fish, after which it is cooked within a range of moisture values, by means of remote-controlled microwaves, which turns the electromagnetic energy into heat that absorbs the different tissues of the fish, in such a way that all of the most important parts of the fish are exposed to the different temperatures that are best suited to their cooking requirements. After this process has been completed the fish is weighed a second time to find out exactly how much weight it has lost during the initial process and in order to be able to establish criteria on the basis of the type of fish, its place of origin or source, etc., all this information being stored in a database. The skin is then removed from the fish by means of a jet of pressurised water from injector nozzles, after which the quality of the product is checked, before it is finally packed. All of the aforementioned operations are carried out as part of an automatic and continuous process involving conveyor belt lines.

The installation for putting this methods into practice consists of a conveyor belt on which the fish or shellfish is placed, the fish then being taken as far as a weighing system, where the weight information is recorded by a robot that controls the system, this robot being programmed with all the parameters and specific formulae that are required to automatically control the process from beginning to end.

As soon as the fish has been weighed, it is conveyed mechanically to a cooking unit with a chamber that is equipped with a series of magnetrons, guided by a control robot, which are responsible for heating the different parts of the product at a constant temperature that depends on the individual requirements of these different parts. The aforementioned chamber is also equipped with a hot-air generating system and a steam generating system, controlled by the robot by means of different applications.

The conveyor belt that moves the fish inside the aforementioned chamber is made of material that is insulated against microwaves, the material used being fibreglass coated with Teflon.

The chamber is also equipped with high-precision wave blocker, to prevent the electromagnetic waves from leaving and to guarantee the safety of the computer program that is installed in the robot, and ensuring that there is no leakage to the exterior.

When the fish leaves the cooking unit, it is conveyed with its skin to the removal point, in such a way that a conveyor belt enters an ongoing cleaning unit, which removes the skin using remote-controlled pressurised water injector nozzles, the aforementioned cleaning unit being equipped with filters that make it possible to recover the removed skin so that it can be made use of.

The skinless fish is then transported on a conveyor belt to a cabin equipped with micro-cameras that subject the final product to quality control from any monitor that is associated with the control robot, this cabin also being provided with windows so that the process can be checked visually from the same place.

Finally, the fish is sent out of the quality control cabin on a conveyor belt so that it can be packed.

### DESCRIPTION OF THE DRAWINGS

To complement this description, and with the objective of enabling better comprehension of the characteristics of the invention, in accordance with an example of a preferred embodiment of same and as an integral part of the description, we have included a set of drawings of an illustrative and non-restrictive nature, representing the following:

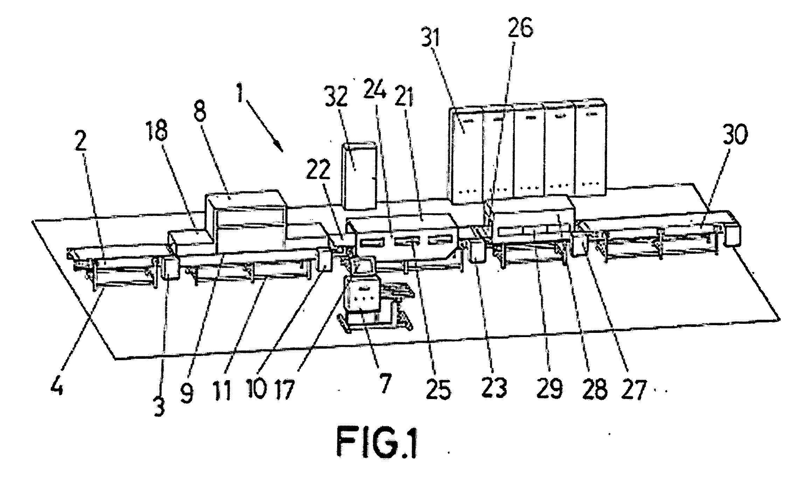

Figure 1.- This figure shows a view in perspective of an installation for cooking and cleaning fish and shellfish realised in accordance with the objective of this invention.

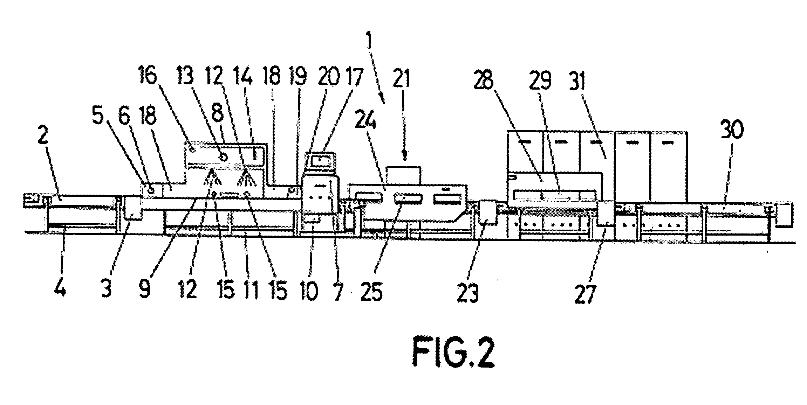

Figure 2.- This figure shows a side view of the installation that can be seen in the preceding figure.

### REALISATION OF A PREFERRED EMBODIMENT OF THE INVENTION

It can be observed in the aforementioned figures that the installation for cooking and cleaning fish and shellfish (1) is equipped with a conveyor belt (2), on which the raw fish still in its unskinned form is placed on some boxes made of Teflon and PVC, which are especially designed for work inside a microwave oven, this conveyor belt being operated by a motor (3), and mounted on a frame (4).

The conveyor belt (2) is connected up to an ongoing weighing conveyor belt (5), provided with a series of gauges and sensors (6) that send the data received to a system control robot (7) equipped with a processor that can automatically control the entire fish cooking and cleaning process from beginning to end. With a view to this, the aforementioned device is provided with software and programs for cooking and skinning the fish, for cleaning and making use of the skin, as well as programs for the ongoing control and synchronisation of the automatisms, plus a series of safety and control programs to deal with any potential faults.

After the fish has been weighed, it is sent into a microwave oven (8) on a conveyor belt (9) made of fibreglass and coated with Teflon, which is especially adapted to the microwave oven and operated by a motor (10).

The aforementioned microwave oven (8), is composed of a cabin open at the ends and mounted on a frame (11), the interior of this cabin being equipped with a series of magnetrons (12), guided by the control robot (7), these magnetrons (12) being responsible for heating the different parts of the product at a constant temperature that depends on the individual requirements of each of these parts, such as the head, skin, flesh, vertebral column and fins and tail, each one of these parts being exposed to a constant temperature that is applied at the exact temperature required.

The microwave oven (8) is also equipped with a heat wave generator (13), which injects jets of air at a temperature of up to 80° C and a saturated-steam generator (14).

A series of temperature gauges (15) are installed inside the cabin of the microwave oven (8), which enable the system control robot (7) to constantly record the temperature inside as well as to control the temperature of the product as it leaves, and the cabin of the microwave oven (8) is likewise equipped with a series of micro-cameras (16) that have special vapour-proof lenses that display the internal process on a monitor (17) associated with the control robot (7).

The entrance to and exit from the microwave oven (8) are both equipped with filters (18) that block electromagnetic waves, thereby ensuring that no waves can escape from the calculations envisaged for the interior of the chamber.

Next to the exit for the conveyor belt (9), the microwave oven (8) is equipped with a weighing system (19) and a series of gauges (20) associated with the control robot (7), in such a way that the latter can calculate how much weight the fish has lost during the process, this information being extremely useful for market research studies, because it makes it possible to set up a database on the basis of different factors such as the type of fish, its source, size, fat-content, etc.

The gauges (20) also measure any potential microwave leakage, in such a way that if there are any such leaks an alarm is set off and the entire ongoing unit is brought to a standstill.

The microwave oven (8) is also equipped with a pneumatic system for placing gauges on the fish and removing them, which enables the user to analyse its state, the parameters being recorded in the above-mentioned database.

The system that is responsible for heating the different pieces of the fish at a constant temperature that depends on the individual requirements of these different pieces, ensures that when the product leaves the microwave oven (8) it is at its optimum cooking point, which means that its protein and vitamin content are at their maximum potential, and it also guarantees that the fish has been perfectly skinned.

At the exit from the microwave oven (8), the device is provided with a skin cleaning unit (21), made of stainless steel, equipped with a conveyor belt (22) made of PVC, which is operated by a drive motor (23), with a cabin (25) that has a series of windows (26) so that the operator can see inside.

The inside of the cabin (25) is equipped with a system of pressurised water injector nozzles that are remotely controlled by the system control robot (7), which spray the fish a jet of water whose temperature and pressure are controlled, so that the jet of water removes the skin from the fish, the aforementioned cabin (25) being provided with a filter that recovers the skin for future use, as well as other filters for separating the water, fat, etc., in such a way that the skinless fish is sent out through the exit end of the conveyor belt (22).

The inside of the cabin (25), is also provided with a series of micro-cameras, of the same type that the microwave oven (8) is equipped with, which make it possible to control the remote controlled injectors.

The conveyor belt (22) leads to another conveyor belt (26), operated by a motor (27), belonging to the quality control cabin (28), inside which there are a series of micro-cameras and windows (29), so that when the product leaves its quality can be inspected either from a monitor or from the cabin itself, respectively.

Finally, the aforementioned conveyor belt (26) moves the boxes of skinless fish to a standard packing conveyor belt (30).

The installation is also provided with a cabinet (31) that houses the power equipment that supplies the different electrical devices, as well as another cabinet (32) that houses the water pump that supplies the system of remote control injector nozzles belonging to the skin cleaning unit (21).

## Claims

1. A method for cooking and cleaning different types of fish and shellfish, **characterised by** the fact that it consists of weighing the fish first, after which it cooks the product within a high range of moisture values, by means of remote-controlled microwaves that turn the electromagnetic energy into heat, which is absorbed by the different tissues of the fish, in such a way that each part of the fish receives the exact cooking temperature that it requires, these different temperatures being controlled by the use of gauges that are inserted into the fish and extracted from it, and when this process is completed the fish is weighed a second time to find out how much weight it has lost, before the skin is removed from the fish by a guided jet of pressurised water, the quality of the product then being inspected before it is finally ready to be packed.

2. An installation for implementing the 1^{st} Claim, **characterised by** the fact that it is equipped with a microwave oven (8), composed of a tunnel-type chamber that the fish or shellfish is conveyed into mechanically by means of a conveyor belt (2) that is provided with a weighing device at the entrance (5) and a weighing device at the exit (19), which is equipped with a hot-air generator (13) and a saturated-steam generator (14), as well as a series of magnetrons (12), remote-controlled by a control robot (7) that contains specific software for controlling the installation, the exit from the aforementioned microwave oven (8) being connected up to an ongoing cleaning unit (24), the inside of which is equipped with remote-controlled pressurised water injector nozzles, as well as a filter for recovering the skin of the fish, the exit from the aforementioned ongoing cleaning unit (24) being linked to a quality control cabin (28), by means of a conveyor belt (26), the interior of the cabin being equipped with a series of micro-cameras controlled by the control robot (7), the exit end of this cabin leading to a standard packing conveyor belt (30).

3. An installation, as in the 2^{nd} Claim, **characterised by** the fact that the microwave oven (8) is equipped at both the entrance and exit, with filters (18) that block electromagnetic waves, as well as safety gauges for monitoring the electromagnetic waves, plus a pneumatic system for placing gauges on the fish and removing them.

4. An installation, as in the 2^{nd} Claim, **characterised by** the fact that the interior of the microwave oven (8), the skin cleaning unit (21) and the quality control cabin (28) are equipped with a series of micro-cameras with special vapour-proof lenses that display the internal process on a monitor (17) that is associated with the control robot.
